**Europäisches Patentamt**

**European Patent Office**

**Office européen des brevets**

(11) Publication number: **0 099 217**
**A1**

(12) # EUROPEAN PATENT APPLICATION

(21) Application number: **83303867.2**

(22) Date of filing: **04.07.83**

(51) Int. Cl.³: **C 01 C 3/00**

(30) Priority: **06.07.82 US 395189**

(43) Date of publication of application:
**25.01.84 Bulletin 84/4**

(84) Designated Contracting States:
**AT BE CH DE FR GB IT LI LU NL SE**

(71) Applicant: **ELI LILLY AND COMPANY**
**307, East McCarty Street**
**Indianapolis Indiana 46285(US)**

(72) Inventor: **Mannfeld, Robert Larrison**
**5449 Surrey Hill Ct.**
**Indianapolis Indiana 46226(US)**

(74) Representative: **Crowther, Terence Roger et al,**
**Erl Wood Manor**
**Windlesham Surrey GU20 6PH(GB)**

(54) **Recovery of cyanogen bromide.**

(57) Cyanogen bromide is recovered by contacting it with a moving solvent for it, enabling a cyanogen bromide solution to be prepared easily at the time and place where it is to be used.

EP 0 099 217 A1

## RECOVERY OF CYANOGEN BROMIDE

This invention belongs to the field of preparative organic chemistry and biochemistry. It provides a safe and convenient method for the recovery of cyanogen bromide from a mixture in which it is synthesized, or from a mixture in which it has been used.

Cyanogen bromide is a reagent which has long been known to chemists, but has not been extensively used because of its extreme toxicity and its physical and chemical properties which make it difficult to use. Of late, however, it has been found to be a valuable reagent in genetic engineering and biochemistry, because it is particularly useful in cleaving protein chains at a methionine group. See, for example, Chance et al., Peptides, Proceedings of the Seventh American Peptide Symposium, Rich and Gross, Eds., p. 721ff. Accordingly, methods for using it in large scale manufacturing are now needed.

Cyanogen bromide melts at 51°C, and boils at 61°C. Thus, it must be handled as a solid at ambient temperature, unless it is dissolved in a solvent. All process chemists and engineers will understand the difficulties of handling large quantities of a highly toxic solid. Cyanogen bromide is further difficult to handle because it is unstable and decomposes on standing, whether in pure form or dissolved in a solvent.

Its unusual melting and boiling points make cyanogen bromide quite difficult to purify. Its low boiling point encourages purification by distillation, but its high melting point means that it will condense as a solid, unless the condensing heat-transfer surfaces are kept in its narrow liquid range of 51-61°.
It is obvious that such control of the condenser is
difficult, and that the condenser must be extremely
large because of the very low temperature difference
available in such an operation.

The present invention provides a safe, convenient way to recover cyanogen bromide as a solution,
so that it can be produced when and where it is needed,
in enclosed equipment and without any direct handling
of it by the operators.

This invention provides a process for recovering cyanogen bromide as a solution comprising
contacting vapors of cyanogen bromide with a moving
solvent for cyanogen bromide, at a temperature at which
the vapor pressure of cyanogen bromide above the
solution is not significant.

The present process is useful for recovering
cyanogen bromide from mixtures from which it can be
vaporized, and is equally useful for recovering it from
reaction mixtures in which it has been prepared, and
recovering residual cyanogen bromide from reaction
mixtures in which it has been used as a reagent.

The usual processes for synthesizing cyanogen
bromide are reactions of elemental bromine, usually in
aqueous solution, with cyanide salts, especially alkali
metal cyanides.  See, for example, Organic Syntheses,
Vol. II, p. 150, John Wiley and Sons (1947).

Residual bromine from the synthesis creates a very serious corrosion problem in the equipment used for recovery of cyanogen bromide from reaction mixtures in which it has been prepared. Glass equipment is satisfactory, and so are heavily fluorinated polymers such as Teflon and Kynar. However, stainless steel is satisfactory for equipment used to recover cyanogen bromide from mixtures in which it has been used as a reagent.

Since the process of this invention functions by contacting cyanogen bromide vapors with a moving solvent, it is necessary that the mixture from which it is to be recovered be of a nature such that the cyanogen bromide can be vaporized without also producing an appreciable amount of other vapors. Since the boiling point of cyanogen bromide is only 61°C, it is obviously not difficult to satisfy the requirement. Aqueous mixtures are the preferred mixtures from which to recover the compound. Mixtures based on relatively high-boiling organic compounds, however, are quite satisfactory and may be used as is convenient in the circumstances. For example, such high-boiling organic solvents as toluene, xylene, dimethylformamide, formic acid and the like, along with many others which will easily occur to process chemists, may be used as media from which cyanogen bromide may be recovered by vaporization.

The process may be operated at ambient pressure or under a partial vacuum as may be convenient in the circumstances. When the process is operated under ambient pressure, substantially all of the cyanogen bromide is found to be vaporized from an aqueous mixture at an end-point temperature of about 90-95°C. The end-point temperatures will differ, of course, when various non-aqueous mixtures are in use, and the conditions can be easily identified by simple experiments which will be intuitively obvious to process chemists.

Operation under vacuum is not ordinarily necessary, because cyanogen bromide, while not a highly stable compound, is sufficiently stable that it can stand brief exposure to elevated temperatures. It may be necessary, however, to operate under vacuum in order to protect some other component of the mixture from elevated temperature.

The need to keep the vaporization temperature low will arise often when cyanogen bromide is used as a protein cleaving agent in biochemical operations. In such an instance, it is important to be able to remove the cyanogen bromide from the biochemical reaction mixture, so that later operations carried out on it are free from the hazards of handling cyanogen bromide. Since the reaction mixture necessarily contains heat labile proteins, high temperatures obviously must be avoided and easily can be avoided by vaporizing the cyanogen bromide under vacuum. The necessary degree of vacuum depends on the temperature which the reaction mixture can tolerate; in general, pressures in the range of up to 40 mm. of mercury will keep the temperature of vaporization below about 25°C when the cyanogen bromide is vaporized from an aqueous mixture. Again, operation under vacuum will occur at various temperatures when the mixture is non-aqueous; convenient operating temperatures and pressures are easily found by an ordinarily skilled process chemist, for any given cyanogen bromide-containing mixture.

The cyanogen bromide vapor is simultaneously condensed and dissolved by contacting it with a moving solvent for cyanogen bromide. The compound is soluble in water, and in many readily obtainable organic solvents, including alkanols, alkyl ethers, alkanoic acids and the like. More particularly, such solvents as ethanol, methanol, isopropanol, ethylene glycol, diethyl ether, dipropyl ether, tetrahydrofuran, ethyl butyl ether, formic acid, acetic acid, butyric acid, propionic acid, and aqueous solutions of such solvents which are water-miscible are suitable.

A particularly preferred embodiment of the invention is that in which the solvent is aqueous formic acid. The mixture of aqueous formic acid and cyanogen bromide is a particularly effective protein cleaving agent, and is in wide use for that purpose. Accordingly, the ability of the process of this invention to provide a solution of cyanogen bromide in aqueous formic acid is one of its most important properties. Rather concentrated formic acid, containing in the range of about 60% - 80% by volume of formic acid, is usually used and is particularly preferred.

The concentration of cyanogen bromide which can be achieved is, of course, directly linked to the operating temperature of the condenser and the concentration of cyanogen bromide in the mixture from which it is to be recovered. Of course, efficient operation is only obtained when the condenser is operated at a temperature at which the vapor pressure of
cyanogen bromide is not significant. When the operation is carried out at ambient pressure, it is most
preferred to operate the condenser in the range of from
about 5°C to about 15°C, to assure that the vapor pressure of cyanogen bromide can never become high enough
to produce significant vaporization of it from the
product solution. At such temperatures, concentrations
in the general range of up to about 20% by weight of
cyanogen bromide in aqueous formic acid can be readily
obtained. However, temperatures higher or lower may be
freely used, depending on the conditions and objectives
of the particular process at hand. In general, condensing temperatures from about -20°C to about 50°C may
be used; temperatures in the range of from about 0°C to
about ambient temperature are more preferred.

Operation of the process under vacuum, of
course, necessitates lower temperatures and, accordingly,
lower concentrations of cyanogen bromide in the product
solution. For example, when aqueous formic acid is the
solvent, operation under vacuum at about -15°C condensing temperature will conveniently produce a cyanogen
bromide concentration in the range of about 5-7%, and
is most preferred. Other temperatures in the range of
from about the freezing point of the solvent to about
ambient temperature may be used, more especially in the
range of about -30°C to about 15°C. In general, it is
preferred to use a condenser temperature such that the
vapor pressure of the cyanogen bromide is reduced to about
10 percent or less of the operating pressure.

The critical aspect of the present invention is its contacting of cyanogen bromide vapor with the solvent, under conditions where the solvent is moving to provide intimate contact. Most conveniently, an ordinary countercurrent column is used, in which the cyanogen bromide vapor moves upward and contacts downflowing solvent. The examples below make use of a packed column, that is, a cylinder filled with a bulky, porous mass, usually composed of loosely packed spirals, rings, saddle-shaped objects or the like. Equally efficiently, the process may be carried out in a plate-type column which contains horizontal plates with simple perforations, or equipped with bubble caps or the like, in which contact of vapor with moving solvent takes place as the vapors pass upward through the liquid on the plates.

While it is preferred to contact the cyanogen bromide vapor with the moving solvent in a column, other contacting methods are equally applicable although less efficient. For example, the vapor may be allowed to enter a chamber into which the solvent is sprayed so that the vapor comes in contact with a large volume of solvent droplets. The vapor may be directed against a flowing film of solvent, particularly where the film flows over a rough surface so that it is in turbulent flow. The vapor may be directed through one or more falling curtains of solvent. Or, a cocurrent column may be used, in which the vapor and solvent flow the same direction, rather than against each other. Usually, in such a case, both the vapor and the solvent will enter the column at the top, so that the vapor does not have to overcome the pressure of a column full of liquid solvent, as would be the case if both streams entered at the bottom.

The choice of equipment in which to contact solvent with the vapor is not critical and may be made by any process engineer on the basis of principles which have been known in his art for many years. The process, in its physical manipulation, is not different from many other liquid-vapor contacting processes.

The following examples illustrate the use of the process of this invention.

### Example 1

Synthesis and recovery of cyanogen bromide

To a tank was added 250 l. of water at 4°C, followed by 102 kg. of bromine. To the tank was slowly added a solution of 100 l. of water and 34 kg. of sodium cyanide at 5°C. The tank containing the bromine-water mixture was agitated while the cyanide addition was made, and the temperature was controlled at below 15°C. All of the cyanide solution was washed from its makeup tank with a little added water, and the agitation of the reaction mixture was continued for 30 minutes after completion of the addition.

The tank containing the reaction mixture was then attached to a glass packed column 30 cm. in diameter and 120 cm. tall. To the top of the column was supplied continuously at the rate of 40 l./min., a solution of 130 l. of 98% pure formic acid and 130 l. of 70% pure recovered formic acid at 0°C. Vapor from the reaction tank entered the bottom of the column through a heat-traced vapor pipe, and the solution leaving the column was returned to the tank containing the formic acid to be cooled and returned to the top of the column.

The reaction mixture was heated to distill cyanogen bromide until the pot temperature reached 95°C, and its volume had been reduced by 80 l.

The volume of the formic acid-cyanogen bromide product solution was 340 l., its analysis for cyanogen bromide was 194 g./l., and its formic acid analysis was 74.8% by volume.

### Example 2

Recovery of used cyanogen bromide

A formic acid-cyanogen bromide solution similar to that prepared in Example 1 was used to cleave an insulin chain obtained from a fermentation of E. coli K12, utilizing a plasmid containing synthetic A-genes linked to an appropriate leader DNA by means of a methionine codon group. The cyanogen bromide used in the lot was supplied in the form of 643 l. of solution containing 20.7 g./l. of cyanogen bromide and 71.7% by volume of formic acid, and 152 kg. of solution containing 192.5 g./l. of cyanogen bromide and 72% by volume of formic acid. The total amount of the cleavage reaction mixture was 7185 kg.

After the cleavage reaction was over, the reaction mixture was put under reduced pressure of 40 mm. Hg, gradually increasing to 30 mm. Hg, and was vacuum distilled at 20-25°C, using a column system similar to that described in Example 1 above. The liquid supplied to the top of the column was a cyanogen bromide-formic acid solution containing about 50 g./l. of cyanogen bromide and about 70% by volume of formic acid, of which 350 l. was supplied.  The liquid supplied to the top of the column was at about 15°C at
95 l./min.

The distillation was continued until 633 l.
of condensate had been recovered in the product tank.
The product was analyzed and found to contain 49.5
g./l. of cyanogen bromide.

The residual cyanogen bromide in the cleavage
reaction mixture was destroyed by the addition of 1.1
kg. of dimethyl sulfide to it.

X-5902 —11—

## CLAIMS

1. A process for recovering cyanogen bromide as a solution comprising contacting vapors of cyanogen bromide with a moving solvent for cyanogen bromide, at a temperature at which the vapor pressure of cyanogen bromide above the solution is not significant.

2. A process of claim 1 wherein the solvent is water, an alkanol, an alkanoic acid, an aqueous solution of an alkanol or an alkanoic acid or an alkyl ether.

3. A process of claim 2 wherein the solvent is an aqueous solution of an alkanoic acid.

4. A process of claim 3 wherein the solvent is an aqueous solution of formic acid.

5. A process of any one of claims 1-4 wherein the contacting takes place in a column wherein the vapors of cyanogen bromide move counter to the movement of solvent.

6. A process of any one of claims 1-5 wherein the contacting takes place at about the ambient pressure.

7. A process of claim 6 wherein the contacting takes place at a temperature from −20°C to 50°C.

8. A process of any one of claims 1-5 wherein the contacting takes place under a partial vacuum.

9. A process of claim 8 wherein the contacting takes place at a temperature from −30°C to about 15°C.

10. A solution of cyanogen bromide in water, an alkanol, an alkanoic acid, an aqueous solution of an alkanol or an alkanoic acid, or an alkyl ether whenever prepared by the process of any one of claims 1-9.

European Patent
Office

**EUROPEAN SEARCH REPORT**

Application number

EP 83 30 3867

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| A | Chemical Abstracts vol. 94, no. 22, 1 June 1981, Columbus, Ohio, USA H.P. CROCKER "Cyanogen bromide reports", pa ge 327, column 2, abstract no. 179941y & Chem. Eng. News, vol. 59, no. 5, 1981, page 49<br><br>--- | 1 | C 01 C    3/00 |
| A | US-A-2 826 546  (G.W. WALPERT et al.)<br><br>--- | | |
| A | US-A-2 826 545  (G.W. WALPERT et al.)<br><br>----- | | |

| | TECHNICAL FIELDS SEARCHED (Int. Cl. ³) |
|---|---|
| | C 01 C    3/00 |

The present search report has been drawn up for all claims

| Place of search | Date of completion of the search | Examiner |
|---|---|---|
| BERLIN | 02-09-1983 | ASSOGNA R. |